# EUROPEAN PATENT APPLICATION

(11) **EP 1 209 554 A1**
(43) Date of publication of application: **29.05.2002**
(21) Application number: 00204122.6
(22) Date of filing: 21.11.2000
(51) Int. Cl.: G06F 3/033

(54) **Position detection system with graphical user interface**

(71) Applicant: Tool-Tribe International A/S, 7100 Vejle (DK)
(72) Inventor: Stokholm, Thorkild, 7300 Jelling (DK)
(74) Representative: Elmeros, Claus

(57) **Abstract**

**Summary**

The present invention relates to a position detection system comprising at least one detector connected to at least one computer, said system comprising a user interface.

The invention further relates to a graphical user interface for a position detection system, a method and use thereof.

## Description

### Background of the invention

The invention relates to a position detection system, a graphical user interface, a method and use thereof.

In the recent years, position detection systems have developed quite tremendously and the systems known today are capable of detecting the position of a stylus on a whiteboard in such a way that the image on a connected computer reflects the drawn image on the whiteboard with reasonable accuracy.

This means that position detection systems have gained widespread use in especially corporate environments where they are used to electronically document the topics of meetings or presentations in particular.

However, the known position detection systems suffer from the drawback that they require some technical expertise in order for them to be correctly installed. This often means that installation of the system is a quite lengthy processes to be carried out ahead of e.g. a meeting which leads to less use of the system. The system will often only be used on special occasions when it is extremely necessary to document the matter of e.g. meeting. With less use, the danger of totally forgetting how to use the system arises and any expertise or knowledge of installing the system disappears quickly.

The user-friendliness of the systems during regular use is also quite limited, especially since the system comprises to separated parts: The system on the whiteboard and the computer usually situated at a distance from the whiteboard e.g. on table.

The communication between the user and the computer is very important and requires that the user always has a good "picture" of what the computer is recording from the position detection system. However, with the known systems, the user can only gain this "picture" by leaving the whiteboard and sit in front of the computer. Here, he has to perform different operations to gain the "picture" before he can return to the whiteboard and continue his presentation on the whiteboard. This break in his presentation often means that the audience or he has lost concentration which makes the presentation less engaging.

If the user instead concentrates on the presentation, there is risk of malfunction or wrong use of the system in the sense that the presentation is not recorded by the system. Also, it becomes very distracting to the user because he will wonder whether the system is functioning properly or not.

The object of the invention is to create a position detection system eliminating the above-mentioned problem. In particular, it is an object of the invention to create a position detection system with improved communication between the user and the system in relation to both installation and use.

### The invention

When, as stated in claim 1, a position detection system comprising at least one pointer device (13) at least one detector (11, 12) adapted for detecting the position of the at least one pointer device (13), signal processing means (19, 23a; 23e) for controlling the said at least one detector (11, 12) said system comprising a user interface, it is possible to enhance and improve the communication between the user and the system.

According to a preferred embodiment of the invention, the signal processing means is a separate computer or a part of a separate computer connected to the position detection system. It should however be emphasized that the signal processing means can be incorporated in one of the system components e.g. the penholder or even in parts be incorporated in both the computer and a system component.

The invention, as stated in claim 2, comprises a user interface comprising at least one light emitting arrangement, at least one sound emitting arrangement, routing means, said routing means being adapted to routing fault states to said sound emitting arrangement and to routing no-fault states to the light emitting arrangement.

According to the invention, the state of the system is clearly indicated to the operator in an advantageous intuitive and simple way.

Hence, the user may not only rely upon fault-state indications but also on "all is well"-indications. Applicable "all is well"-indication may vary from application to application, but an advantageous "all is well"-indication is a light indication showing that the different components, especially the detectors, have been plugged into the system correctly.

When, as stated in claim 3, the at least one light emitting arrangement comprises light indicating means integrated in the position detectors, the installation of the system is kept simple and easy since the light emitting arrangement does not include further separate units.

Also, the integration in the detectors ensures that the light emitting arrangement is always visible to user and usually emits light in the user's direction.

When, as stated in claim 4, said user interface comprises at least one light emitting arrangement, it is possible to obtain a preferred embodiment of the invention.

According to the preferred embodiment, the light signaling emitter comprises light emitting diodes, LEDs, e.g. incorporated in the system detectors and/or a penholder. Moreover, such light emitters may be integrated in the board.

According to a preferred embodiment of the invention, the light emitting arrangement may comprise a clear visual statement on the computer monitor controlling the application. It should nevertheless be emphasized that such visual statement should always be readable to the user of the system.

The invention, as stated in claim 5, comprises at least one light emitting arrangement comprising light emitting means integrated in the position detectors.

According to the invention, the incorporation of light emitters in the position detectors facilitates a user-comprehensible understanding of the detectors being connected in the right manner.

The invention, as stated in claim 6, comprises a user interface comprising at least one sound emitting arrangement.

According to a preferred embodiment of the invention, the sound emitting arrangement may e.g. comprise loudspeakers incorporated in one of the system components e.g. the penholder.

According to another embodiment of the invention, the system utilizes the loudspeaker of a computer which controls the system. By using the loudspeaker of the computer, it is possible to minimize the size and weight of the position detection system. This is especially advantageous in connection with transportation of the system and with mounting of the system on e.g. a whiteboard.

When, as stated in claim 7, said system comprises routing means, said routing means being adapted to routing predefined fault states and no-fault states to signaling means, it is possible to device and control the interface of the system in an intelligent way.

It should be emphasized that the different functions of state detection and state routing may be performed in many different ways. In other words, the routing may be a set of statements incorporated in different routines of the software and/or it may be arranged in a software module handling different input states. The important thing is that the overall function of the system is performed somewhere in the system hardware, i.e. the system routes the current states of interest (predefined) to the intended signalling means.

When, as stated in claim 8, said routing means routes the fault states to said sound emitting arrangement and the no-fault states to the light emitting arrangement, it is possible to inform the user of a fault state in a secure manner. Usually, it is easier to get the user's attention by means of sound than by means of light. The important thing is, however, that the user is quickly informed of any fault states and responds to such fault signals.

The invention, as stated in claim 9, comprises a graphical user interface (GUI) for displaying data from a position detection system according to claim 1, said GUI comprising program processing means including time reference generator means for recording and storing a sequence of images, said images referring to a time reference provided by said time reference generator of at least two time lines, at least one image monitoring area adapted to monitoring images of said recorded and stored sequence of images with reference to at least one of the said time lines, at least one of said time lines being adapted to monitoring a sub-interval of at least one of said at least two time lines.

Hereby, it is possible for a user to monitor a sequence of images in a preferred manner. The two time lines allow the user to see and pick the images in a time period with higher and lower resolution on the time line. This allows the user to easily locate a particular image on the high resolution time line or to browse through a large number of images quickly with only small hand movements on the low resolution time line.

It should be noted that a time line should be interpreted broadly as a visual indication easy to comprehend by the user of the system, thus providing the user information of when the image was recorded relative to the other recorded images. According to the invention, a time line may preferably be a traditional time line as described and referred to in the description and the drawings of this application.

A time line may comprise a number of squares, blocks, vertical lines, dots or simply a continuous line which has markings at regular intervals.

It should also be noted that an image monitoring area should be interpreted as any type of monitoring area, such as an area showing many thumb pictures with low detail resolution or an area showing one or a few very large and detailed pictures. A combination that includes the two is also possible

When, as stated in claim 10, an image displayed at the at least one monitoring area refers to a cursor referring to at least one of said at least two time lines, it is possible to overview the GUI in an easy way and locate the actual time position on the time line of the images being displayed.

When, as stated in claim 11, the at least two time lines have different time resolutions, a further advantageous embodiment of the invention has been obtained.

The different time resolutions mean that the user can choose the one which is the most suitable for the present task.

When, as stated in claim 12, the GUI further includes a snapshot monitoring area comprising one or more snapshots, it is possible to see the images of the snapshot in a larger version and hereby be able to see more details, thus enchancing the user's possibility of locating the right image fast.

When, as stated in claim 13, a snapshot includes one or a sequence of images, a further advantageous embodiment of the invention has been obtained.

The including of a number of images in snapshots improves the search accessibility of the GUI because it is easy to find the right snapshot among the limited number of snapshots and it is possible to "navigate" within the snapshot.

When, as stated in claim 14, the GUI further includes a text monitoring and/or editing area, it is possible to comment on the created snapshots. The comments make it easier for the user to remember and locate a snapshot or an image in a fast and advantageous way.

When, as stated in claim 15, text of the text monitoring and/or editing area is linked to at least one snapshot, it is possible to recall the text by clicking on the snapshot or in another way activate the snapshot.

By playing a sequence of snapshots or images, it will be possible to see the linked text in a text monitoring area as a sort of subtitle changing with the snapshots or the images.

When, as stated in claim 16, at least one piece of sound is linked to at least one snapshot, it is possible to communicate the information of the snapshot in a more accessible way. The combination of sound and the images within the snapshot may create a sort of multimedia session for the user where the session is closer to the "real life" perception e.g. of a presentation.

When, as stated in claim 17, at least one of the snapshots is in a data format allowing export and/or import said snapshots between computers or between a computer and at least one other communication device, it is possible to communicate snapshots with other persons located anywhere if they have a computer with e.g. an Internet connection. Especially with the text monitoring area, it will be possible to exchange comments relating to the snapshots.

When, as stated in claim 18, a graphical user interface for displaying data from a position detection system according to claim 1 and at least one image generating system, said GUI comprising a program processor including a time generator wherein at least one integrated image is created by integrating the at least one image from the position detection system partly or fully in the at least one image of the image generating system in relation to time of the program processor including a time generator, an advantageous embodiment has been obtained.

Hereby it is possible to create and store two different images together as one integrated image or as one image where the two images are layered on top of each other in relation to time.

The projected image may be any kind of image including an image of a program where the program image may comprise areas for entering information. The image may also be basic elements of a drawing ready for additional drawing such as help lines or even a corporate image, color, or logo/trademark.

When, as stated in claim 19, said integrated image is completely or partly scanned by a character recognizing system, it is possible to convert text written on the whiteboard to characters understandable to the computer. Hereby, it is possible to store numbers or words in a database, such as a financial database and make financial calculations on the basis of the numbers.

In an advantageous embodiment of the invention, the projector may be used to project results from e.g. financial operations on the whiteboard.

When, as stated in claim 20, the result of said scanning is stored in one or more programs on at least one computer and/or controls said one or more programs, a further advantageous embodiment of the invention has been obtained.

The invention, as stated in claim 21, comprises a position detection system comprising at least one position detector (11, 12) for detecting the position(s) of at least one pointer (13) on at least one reference area (RA) means for mapping said position(s) relative to said at least one reference area (RA) into at least one data representation at least one image generating system (24) adapted for generating at least one image (I) on said at least one reference area (RA) according to image data (ID, BMP) said system comprising means for storing the said pointer position(s) relative to the image data (ID) generated on the reference area (RA).

The positions may be mapped into numerous different applicable data representations suitable for the purposes, such as different types of bitmaps or vector based formats.

According to the invention, the pointer positions may be stored in a relationship to the image data, thereby maintaining the mutual relationship between the recorded pointer position(s) and the image generated on the reference area. Thus, a complete image representing both the "background" image and the image generated by the pointer may be established.

Accordingly, the embodiment of the invention provides a possibility of providing an image on e.g. a whiteboard or at least a white background, detecting and storing the positions of a pointer drawing "on" the image in such a way that a complete image of both the projected (generated) image and the drawing made by the pointer may be stored.

Evidently, such an image may be stored in several different ways, e.g. in a traditional CAD program, where one the layers is the generated image and where another layer comprises the drawing made by the pointer "on" the generated or projected image. Accordingly, the recorded pointer positions may be edited without editing the background image.

When, as stated in claim 22, said image generating system (24) comprises an image projecting system.

According to the invention, a traditional image projection system may be applied for generating an image on a reference area, e.g. a whiteboard.

When, as stated in claim 23, said means for storing the said pointer position(s) (13) relative to the image data (ID) generated on the reference area (RA) are adapted for merging at least one data representation and the at least one image data into one image file.

According to the invention, the image file may be represented in one file readable by conventional image readers. Applicable file formats may e.g. be Bitmap, JPEG or even vector based drawing formats.

The invention, as stated in claim 24, comprises a position detection system comprising at least one position detector (11, 12) for detecting the position (s) of at least one pointer (13) on at least one reference area (RA) means for mapping said position(s) relative to said at least one reference area (RA) into at least one data representation at least one image generating system (24) adapted for generating at least one image (I) on said at least one reference area (RA) according to image data () said image generating system generating an image representing the dynamic interface of a computer program running on a computer, said system comprising character recognition means for converting at least some of the said data representations into digitally represented characters, and said system comprising means for inserting the said digitally represented characters into the running program via the said dynamic computer interface.

According to the invention, the detection system may be applied for writing characters into e.g. a text processor or e.g. a spreadsheet, thereby using the image generated on the reference area as a virtual interface to a computer and thereby controlling the running program by the pointer.

It should be noted, that the pointer, according to a preferred embodiment of the invention may advantageous include means for switching the functionality of the pointer between a "mouse" operation on the application or a "character fill-in" operation including the above mentioned character recognition and conversion.

When, as stated in claim 25, said image generating system (24) comprises an image projecting system.

According to the invention, a traditional image projection system may be applied for generating an image on a reference area, e.g. a whiteboard.

Other possible applications may e.g. a large display as image generating means.

When, as stated in claim 26, a graphical user interface for displaying data from a position detection system according to claim 1, said GUI comprising a snapshot monitoring area, said snapshot monitoring area incorporating snapshot selecting means, said snapshot selecting means facilitating display of at least one of the images associated with the selected snapshot, it is possible to overview the snapshots easily in a controllable way.

When, as stated in claim 27, said snapshot selecting means facilitating display of a sequence of images, starting with the image associated with the selected snapshot a preferred embodiment of the invention has been obtained.

Especially the possibility of "navigating" within a snapshot and seeing every image in a snapshot in a controllable way is advantageous.

It shall be emphasized that the snapshot selecting means can be controlled in many ways e.g. by clicking directly on the snapshot, by using a keyboard incorporated in the GUI or by using computer keyboard combinations.

When, as stated in claim 28, the snapshot selecting means comprises a PLAY control, the user friendliness of the system is enhanced. If the selecting means is combined with other control functions such as FAST FORWARD placed in proximity of the PLAY control, it is possible to control the selecting means very easily and in a manner which is immediately understandable to most people because of the similar construction of CD players and tape recorder keyboards.

### Figures

The invention will be described in the subsequent text with reference to the figures, where
- fig. 1: shows a overview of the invention,
- fig. 2: illustrates principles of an audio-visual part according to a preferred embodiment,
- fig. 3: illustrates possible routing of states,
- fig. 4: shows a first preferred embodiment of a position detection system with image projecting means,
- fig. 5a: shows a second embodiment of a position detection system with image projecting means,
- fig. 5b: shows a flow chart of one embodiment of the invention,
- fig. 6: shows a GUI for a position detection system,
- fig. 7: shows part of the time lines in the GUI,
- fig. 8: illustrates the principles of time line creation,
- fig. 9: illustrates a GUI with snapshot selecting means,
- fig. 10: illustrates different snapshot opportunities, and
- fig. 11: illustrates the exchange of GUI between two computers or between a computer and a communication device.

### Detailed description

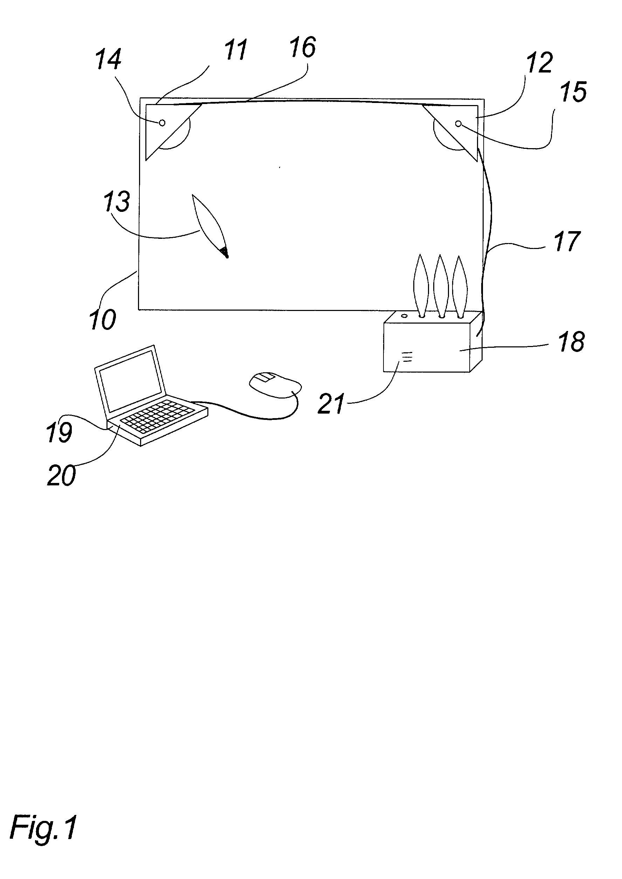

Figure 1 shows an overview of the invention. It comprises a position detection system including two or more positions detectors 11, 12 placed in the corners of a foundation 10 such as a writeable board and preferably a whiteboard or a blackboard. The detectors 11, 12 are designed to detect the position of a writing unit 13, such as a whiteboard pen or a stylus housing a pen. The detectors are preferably infrared (IR) detectors and may either be integrated in the board or mounted onto the surface of the board by some mounting device, preferably magnets. Further, it comprises a control box with central processing hardware of the whole system built into a penholder 18, preferably mounted under or integrated in the board. The detectors 11, 12 are connected to the penholder 18 by cables 16, 17 either inside, at the back of or along the edges of the board.

The penholder 18 is connected to a power supply which may be a main power supply such as a domestic power supply. The power supply may also be a battery power supply e.g. incorporated in the penholder 18. The detectors 11,12 receive the necessary power from the penholder 18 e.g. transmitted in the cable connections 17, 18 which also are used for position data transmission. In another embodiment of the invention the detectors each has its own battery power supply.

A computer 19 communicates with the cable system of the penholder 18 and the detectors 11, 12 by means of a wired or wireless communication. According to the illustrated embodiment, the computer 19 controls the system.

The penholder 18 may comprise a serial or parallel signal interface to the computer 19 to be used in relation to data transfer between the two. The interface may comprise a wired or a wireless connection to the computer as mentioned above. In a preferred embodiment of the invention the connection is a bluetooth connection. In another preferred embodiment the transfer is accomplished by storing data on a storage media such as flash RAM and subsequently moving the RAM from one to the another.

If the signal processing means is incorporated in a system component such as the penholder and a separate computer is used it will be possible to reduce the data traffic in a connection between the computer and the detector system. Hereby it is possible to use a type of connection with a lower band width such as a cordless connection.

The pen 13 is provided with IR diode-based communication means intended for transmission of the state of the pen 13 to the detection system 11, 12, 18 by means of coded information. A transmission state may e.g. be on/off communication to the system detected by the pen and communicated to the system e.g. to the detectors 11, 12. Other possible states may e.g. be the color of the pen, or the diameter and form of the pen tip.

The detection of the pen 13 may be based on retro-reflective detection performed by the detectors 11, 12. The detectors comprise light emitting means, typically IR light emitting means. The light emitting means are focused on the writing surface. Moreover, the detectors 11, 12 comprise light receiving means adapted to receiving light emitted from the detectors and reflected from retro-reflecting means mounted on the pen 13, thereby facilitating position detection e.g. by means of position detecting methods known within the art.

Other detection methods known within the art may be used in connection with detecting the position of the pen

Moreover, the detectors 11, 12 comprise light emitters 14, 15, e.g. LEDs, controlled by the system control. The light emitters emit wavelengths perceivable by the human eye.

Moreover, the system comprises loudspeaker means 17 incorporated in the computer 19 and/or the penholder 18.

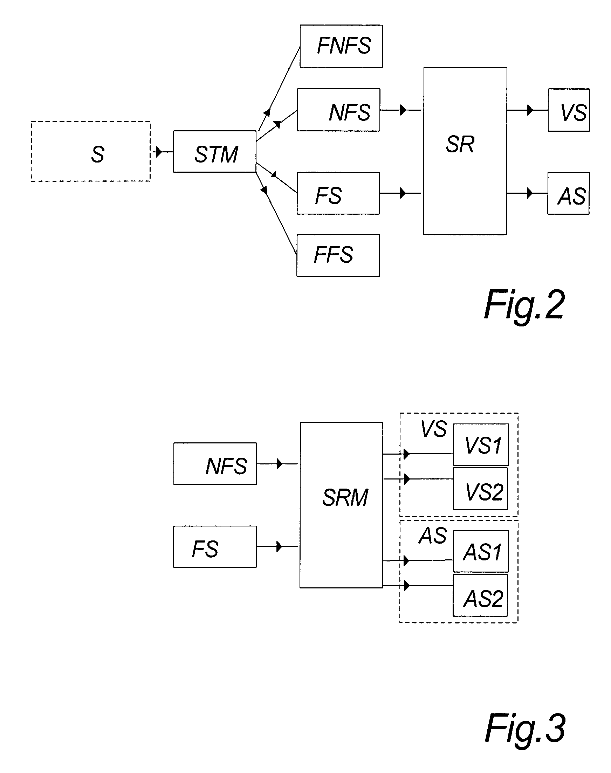

Figure 2 illustrates the principles of an audio-visual part of the man/machine user interface according to a preferred embodiment of the invention.

The flow chart in figure 2 illustrates the detector system in a given state S. The state of the system, or at least some of the states of the system, is monitored by a state-mapper SMT into basically two different "state groups", i.e. a group of states representing a no-fault state NFS, and a group of fault-states FS. It should be emphasized that the state-mapper SMT does not necessarily have to be installed as a separate "body" of software, but may typically be implemented by means of local branching from the different loops and routines of the software running the detector system.

The no-fault state group NFS and the fault state group FS are coupled to state router means SRM. The state router means routes input states to the desired signaling means VS, AS according to a predefined routing method.

According to a preferred embodiment of the invention, the no-fault state group NFS invokes the output of a visual output signal VS indicating that the system is working properly and as intended.

Likewise, according to a preferred embodiment of the invention, the fault state group FS invokes the output of an audio output signal AS indicating that the system is malfunctioning.

It should be noted that the system typically indicates a number of predefined no-fault states actively. Likewise, the system typically indicates only a number of predefined fault conditions actively.

The way of detecting the fault- and no-fault states may vary significantly from application to application and the choice of the signal-invoking states may also vary significantly as well.

Moreover, the signal invoking states may be suitably routed in several different ways.

Figure 3 illustrates possible routings of the states to the audio and light signaling system.

The state routing means SRM will route the predefined states to two different visual signals, a first signal VS1 defining continuous activation of the light emitting VS arrangement, the second signal VS2 defining a flashing activation of the light emitting arrangement VS.

Moreover, the state routing means SRM will route the predefined states to two different audio signals, a first signal AS1 defining continuous activation of the sound emitting AS arrangement, the second signal AS2 defining a different activation of the sound emitting arrangement AS, e.g. in the form of another tune.

According to a preferred embodiment of the invention, the predefined fault-states are all routed to the sound emitting arrangement AS, whereas the predefined no-fault states are all routed to the light emitting VS arrangement.

A possible visual signal invoking state may e.g. be a "connection mode", determining that the system detectors 11, 12 of figure 1 are correctly connected to the penholder 18. Such states may e.g. be indicated by means of the above-mentioned first method VS1, i.e. by continuous activation of the light emitting VS arrangement.

A further visual signal invoking state may e.g. be a "write-detection mode", where the detectors 11, 12 are detecting that the pen 13 is used for writing on the associated board 10, e.g. a whiteboard, and that the detecting coordinates are appropriately obtained and stored in the computer 19 controlling the system. Such states may be advantageously monitored by means of the above-mentioned second method VS2, e.g. by discrete flashing of the light emitting arrangement VS.

A further signal invoking state, now a fault state, is that the user is writing on the board 10 outside the range of the detectors 11, 12 and/or outside the software-defined monitoring area of the computer 19. Other fault states will be invoked if the user uses more than one pen at the same time, if something or someone is in between detectors 11, 12 and the pen 13 or if one detector 11, 12 is not "seeing" the pen when the other is.

It should be emphasized that the different functions of state detection and state routing may be performed in many different ways. The important thing is that the overall function of the system is performed somewhere in the system hardware.

Moreover, it should be emphasized that the light signaling system VS may comprise one or several light emitters, and that the light emitters may e.g. be in different colors, whereby different kinds of states may be routed to the light emitters having different colors.

Moreover, it should be emphasized that the predefined number of fault states and no-fault states may typically be a subset of the total possible fault states and no-fault states, respectively. Hence, the states may be detected and derived from the system process in many different ways.

According to a further embodiment of the invention, a light emitter may even comprise a clear visual statement on the computer monitor controlling the application. It should nevertheless be emphasized that such visual statement should always be readable to the user of the system. It should likewise be noted that the light signaling comprises light emitters 14, 15 incorporated in the system detectors 11, 12 and/or a penholder 18 according to a preferred embodiment of the invention.

According to a preferred embodiment the invention, the sound emitting arrangement may e.g. comprise loudspeakers incorporated in one of the system components e.g. the penholder 18. According to another embodiment of the invention, the system utilizes the loudspeaker of a computer 19 controlling the system.

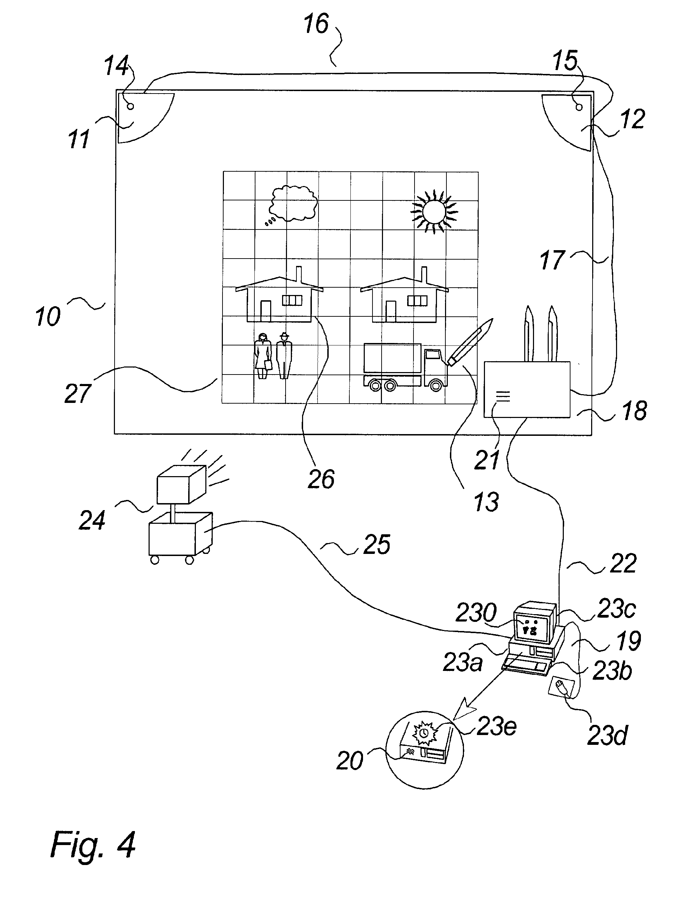

In figure 4, a computer 19 for controlling the position detection system is illustrated. The computer 19 is built up in a traditional manner with a central unit 23a. The central unit 23a includes program processing means, including a time generator 23e, e.g. included in a microprocessor, which may perform or control the compilation of computer programs. The time generator of the program processing means is a source of time signals or time synchronizing signals for computer programs where the time generator may be a part of the program processing means or a separate unit associated with the processing means. The central unit 23a further includes a storage medium and memory.

In addition, the computer 19 has a screen 23b on which a graphical user interface (GUI) 30 is shown, a keyboard 23b, and a computer input device 23d where the computer input device is a computer mouse in this embodiment but could also be e.g. a trackball, a computer pen or a similar computer input device.

The computer 19 may be connected to other computers i.e. a server computer in the area network through an internal network. The computer 19 may also be connected to other distant computers through an external network such as the Internet or similar connection networks.

The storage medium in the computer 19 will usually be used as the initial storage means for the position data, GUI data etc. Secondly, the data could be transported to other computers in different forms.

Figure 4 further shows a picture 26 drawn with the pen or stylus 13 where the positions of the pen or stylus are detected by the position detectors 11, 12 and converted into a picture in the GUI 30.

In a preferred embodiment of the invention, the position system further includes an image generating system 24 such as a projector, the projector being positioned in such a way that an image is projected onto the foundation 10 of e.g. a whiteboard or a blackboard. The projector 24 may be positioned in front of the foundation or behind it e.g. projecting an image onto a semi of fully transparent foundation. The projected image will then have to be laterally reversed.

Other types of image generating systems are possible i.e. a whiteboard on which a fixed image is imprinted onto the surface of the foundation and at the same time predefined in the GUI 30.

The projector 24 has an electrical connection 25 to the computer 19 for transfer of the image to be projected from the computer to the projector and/or from the projector to the computer and the GUI 30.

The image to be projected may be any kind of image exemplified by a net 27 of horizontal and vertical lines in fig. 4. The net 27 will assist the user of the pen or stylus 13 in creating the picture.

In another embodiment, the projected image could be a picture where the user draws circles or lines onto areas of the picture with the pen or stylus for explanatory reasons.

In a third embodiment, the projected image could be part of a picture where the user draws the final elements. If the user wants to illustrate different final elements, he only has to remove the previous elements from the foundation 10 and draw new final elements onto the same projected image or to a new one. An example is a projected roadmap where the user draws different route suggestions.

In the GUI on the computer 19, the projected image 27 and the drawn picture 26 are usually integrated into one image. However, in a situation where only the drawn picture 26 is desired, the projected image can be left out by the GUI 30.

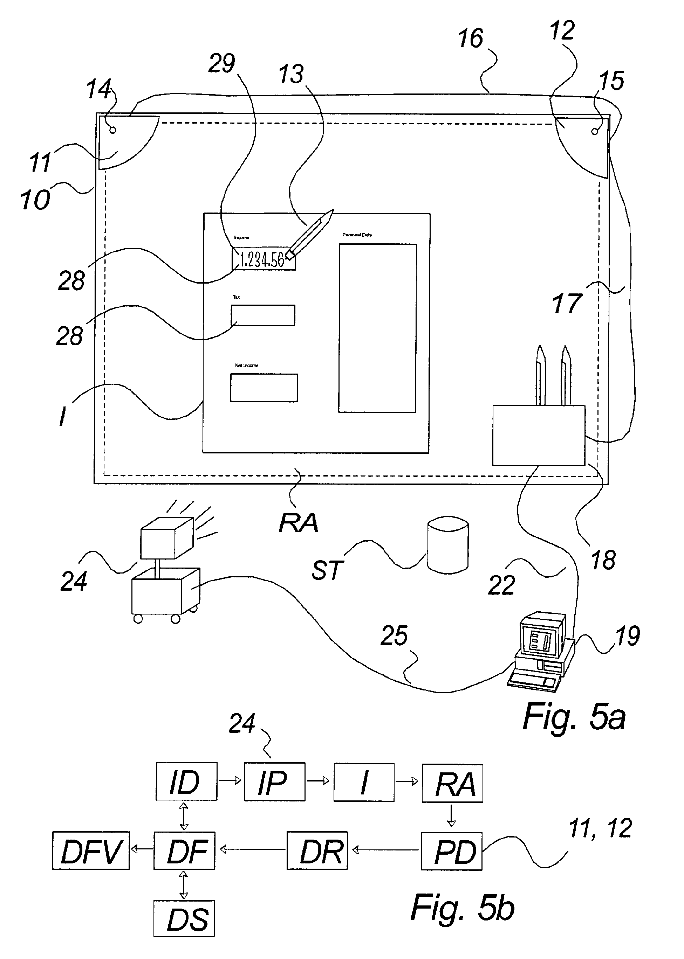

Figure 5 illustrates another preferred embodiment of the invention where an image I is projected onto the foundation 10. The image I is illustrated as a form with different question areas 28 where text may be filled in.

Before any text is filled in the areas it usually will be necessary to perform a calibration of the position detection system in relation to the projected image I and vice versa to ensure a synchronization between the two. The calibration may be a positioning of the pen 13 in the corners of the image and letting the position detection system detect the positions. The GUI may the compare the detected positions with the knowledge it already has about the projected image and subsequently calibrate in relation to the result.

The position detectors 11, 12 detect the positions of the pen or stylus 13 during creation of the text which is written in the areas and transferred to the GUI. In the GUI, the text will be integrated in the projected image in the areas.

In a preferred embodiment, the GUI also includes a character recognizing system which recognizes and converts written text to characters recognizable to the computer 19.

The text could be different kinds of information such as numbers in a financial presentation where it is important that the numbers are readable and do not result in misinterpretations. Also, it is possible to write numbers in an area on the foundation 10 and to have these numbers detected, converted and transferred to a financial or database computer program on the computer 19.

In a further embodiment, the foundation may have separate command areas where the user writes a command with the pen or stylus 13 which is detected and converted by the character recognizing system to a command understandable to the computer. The computer then performs the command which could be ordering the GUI and the computer to store a snapshot of the present picture drawn on the foundation 10.

The command areas may be shown on the foundation 10 by projecting a command area image onto the foundation with the projector 24. If the GUI and the computer 19 know that the areas on the foundation are used only for commands or other similar character based information, it is possible to have these areas surveyed by the GUI. At the same time, any problems with accidental conversion of non-characters on the foundation into actual characters is avoided.

Figure 5 further illustrates a reference area RA on the foundation 10 where the position detection system is capable of detecting a pointer 13 such as a pen or a stylus when it is within the area.

It is also illustrated that there are storage means ST for storing of data such as the position data and the data of the images to be projected. In a preferred embodiment of the invention the storage means ST is incorporated in one of the system components e.g. the penholder 18 or as a separate component connected to one of the system components. The storage means ST may however also be storage means such as a hard disc in a computer connected to the position detection system.

In further preferred embodiment of the invention the position detection system and the computer 19, 23 each has storage means ST e.g. a primary storage in the penholder 18 and a larger secondary storage in the computer. The computer storage may then be the final storage while the penholder storage will be a buffer in an asynchronous data communication between the two.

Fig. 5b shows a flowchart illustrating the principle operations of the above described embodiment of the invention.

Image data ID is provided to an image generating means, such as a projector IP, 24. The projector projects an image I corresponding to the image data ID on the above-described foundation. The image I projected on the foundation may preferably be assigned to a reference area RA of the foundation.

This assignment may be performed in many different ways, if needed. An example of such an assignment may e.g. be performed by the user by means of four reference points made on the reference area in order to "tell" the detecting system that the overlay image is within the manually established reference points. When applying e.g. a whiteboard or a standard blackboard as a foundation, a user may draw or point at the foundation by means of a pointer13. within the reference area RA

Subsequently, or rather simultaneously, pointing made be the user may be recorded by means of the position detector system PD, and the established data representation of the pointing (e.g. writing) may be converted into a data representation DR. This data representation DR, preferably established on a realtime basis, may then be transferred into a data format DF. This data format DF moreover refers to the original image I represented by the image data ID.

Evidently, the position detector system may map the detected positions of the pointer 13 directly into the data format if so desired within the scope of the invention.

The important thing is that both the image data ID and the data representation DR may be established in such a way that the data may be visualized simultaneously e.g. in an image reader (data format viewer) on a computer 19, preferably maintaining the representation as a "cartoon" overlay to the projected image I.

Moreover, the data format DF may stored on a data storage DS.

The positions may be mapped into numerous different applicable data representations suitable for the purposes, such as different types of bitmaps or vector based formats.

According to the invention, the pointer positions may be stored in a relationship to the image data, thereby maintaining the mutual relationship between the recorded pointer position(s) and the image generated on the reference area. Thus, a complete image representing both the "background" image and the image generated by the pointer may be established.

Accordingly, the embodiment of the invention provides a possibility of providing an image on e.g. a whiteboard or at least a white background, detecting and storing the positions of a pointer drawing "on" the image in such a way that a complete image of both the projected (generated) image and the drawing made by the pointer may be stored.

Evidently, such an image may be stored in several different ways, e.g. in a traditional CAD program, where one the layers is the generated image and where another layer comprises the drawing made by the pointer "on" the generated or projected image. Accordingly, the recorded pointer positions may be edited without editing the background image.

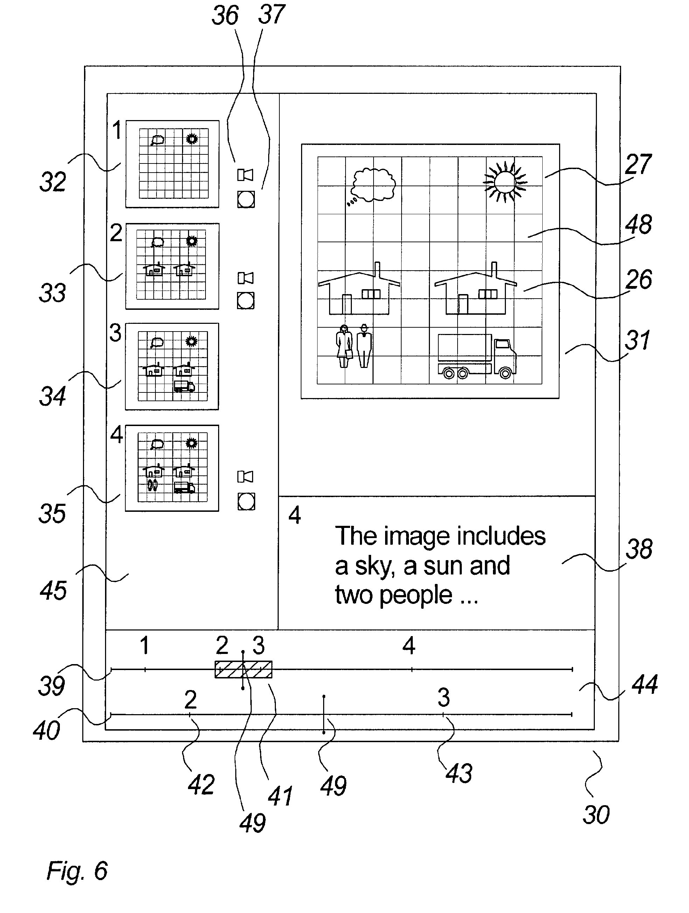

Figure 6 shows an example of a GUI 30 to operate on a computer 19 where the GUI may be used in connection with a position detection system. The system will usually operate in a Windows-based environment but it will, of course, also be possible to make version for Macintosh or other kinds of computers.

The GUI 30 works as a sort of recorder which continuously records the position data from the position detectors 11, 12 by means of the computer program and time controller. The created record comprises all position data and the time of recording the data.

The GUI also has the function of displaying the position data to a user of the system. A preferred GUI 30 according to the invention is divided into a number of areas including an image monitoring area 31, a snapshot monitoring area 45, a text monitoring and/or editing and a time line area 44.

The image monitoring area 31 displays a present image which reflects a picture drawn onto the foundation 10 as detected by the detectors 11, 12. The image may also comprise integration of a picture and a projected image where the integration can be in the form of independent layers on top of each other or semi- or fully integrated images. If integration between the images is complete, it will be possible to let one of the images be the GUI 30 of a computer program such a financial or database program. Another image will include characters written with the pen or stylus 13 on the foundation 10 and recognized and converted by the above-mentioned character recognizing system. The converted characters will be used directly or stored in the computer programs.

In an advanced embodiment of the GUI 30, it will also be possible to change the image or add to the image when it is in the image monitoring area 31.

The time line area 44 shown in figures 3 and 4 comprises two time lines 39, 40 where the first time line 39 is a total time line. The beginning of the time line 39 is the beginning of the detection session and the end of the time line 39 is the present time. This means that the resolution of the time line will decrease as time passes in the detection session. The time line is controlled by the program processor including a time generator 23e and creates a connection between the program processor including a time generator 23e, the time lines 39, 40 and the detected position data.

The time line 39 also has a position indication marker 41 which is slideable along the time line allowing the user to go back in the recorded position data. If the marker 41 is moved along the time line, the position data will be displayed and it will hereby be possible see the development of an image. The size of the marker 41 is changeable by the user i.e. by means of a computer mouse 23d by dragging one of the sides of the marker 41.

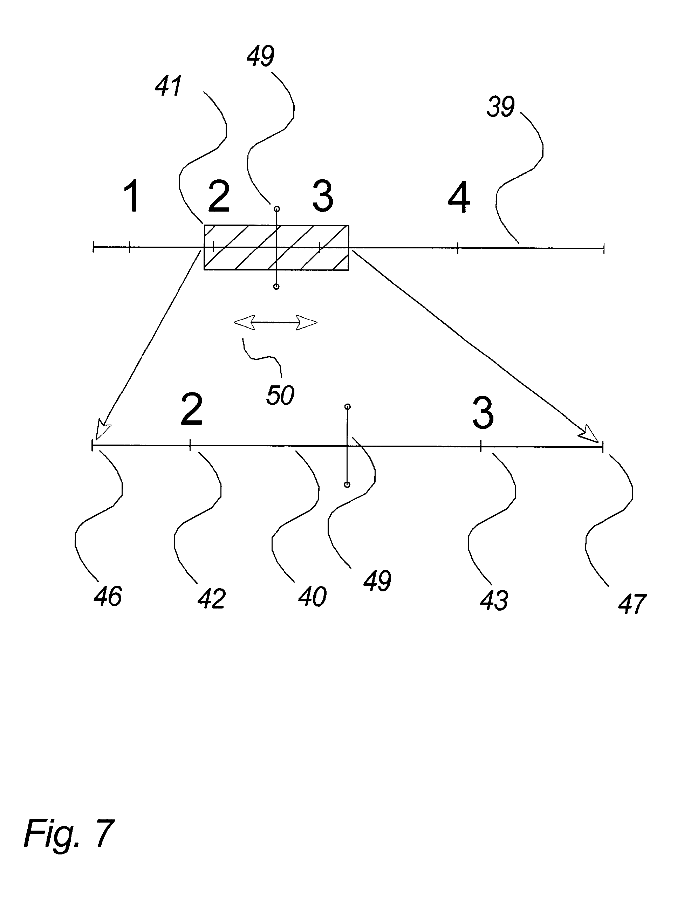

The second time line 40 is a subset of the first time line 39 allowing improved time resolution. Figure 7 shows a preferred embodiment of the time lines 39, 40 where the size of the marker 41 controls the point of beginning 46 and end point 47 of the second time line 40 and thereby the resolution of the second time line 40. The marker also has a cursor 49 incorporated where the cursor is used to illustrate the exact present location on the time lines.

Figures 6 and 7 also show that the time lines 39, 40 can indicate the time of one or more special actions. In this example, the indications 42, 43 indicate the time of two snapshots 33, 34 on the second time line 40.

The snapshots 32-35 are a function of the system which allow the user of a position detection system to store the image present in the image monitoring area 31 i.e. for later recall and use. The recall of a snapshot is possible by clicking on the thumb image of the snapshot in the snapshot area 45 or on the indicator 42, 43 on the first or second time line 39, 40.

The snapshot area 45 includes a number of snapshots 32-35 with accompanying sound and/or text comments. The image will be stored together with information of the time of storage. It is also possible store sound together with image i.e. a microphone recording of the comments stated when drawing the picture on the foundation 10.

Further, it is possible to write comments in the text area 38 of the GUI 30 by means of the keyboard 23b of the computer 19, 23. The text comments will be stored together with the image and, if present, the sound in a complete snapshot. In continuation of recalling a previously stored snapshot, the sound will be played and the comments will be visible in the text area 38.

Whether a snapshot is accompanied by sound and/or text is illustrated by signs. The first sign is a sound indication means 36 and the second sign a text indication means 37 and if the signs are indicated next to the thumb image in the snapshot area, they are present. In an embodiment of the GUI 30, it will be possible to hear the sound or read the text by clicking on the right sign 36, 37.

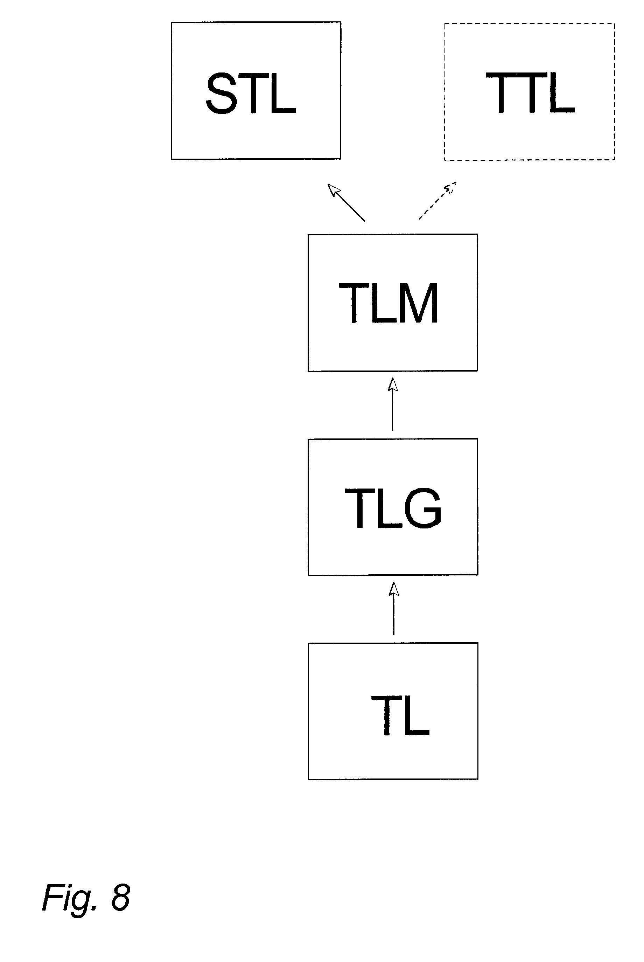

Figure 8 illustrates the principles of a time line grabber TLG. The time line grabber grabs a section of a time line 39, 40, and makes a time line monitor TLM create a new time line. The new time line will have other time resolutions than those of the grabbed time line and the time line grabber TLG and the monitor TLM work as a sort of zoom function between time lines. The resolution of the new time line may be constant or change over time. The grabber TLG may grab more than one time line and hereby create several time lines. The time line which is initially grabbed is not necessarily the one that will be grabbed next. An example of this is a situation where every new time line is created on the basis of the immediately preceding time line.

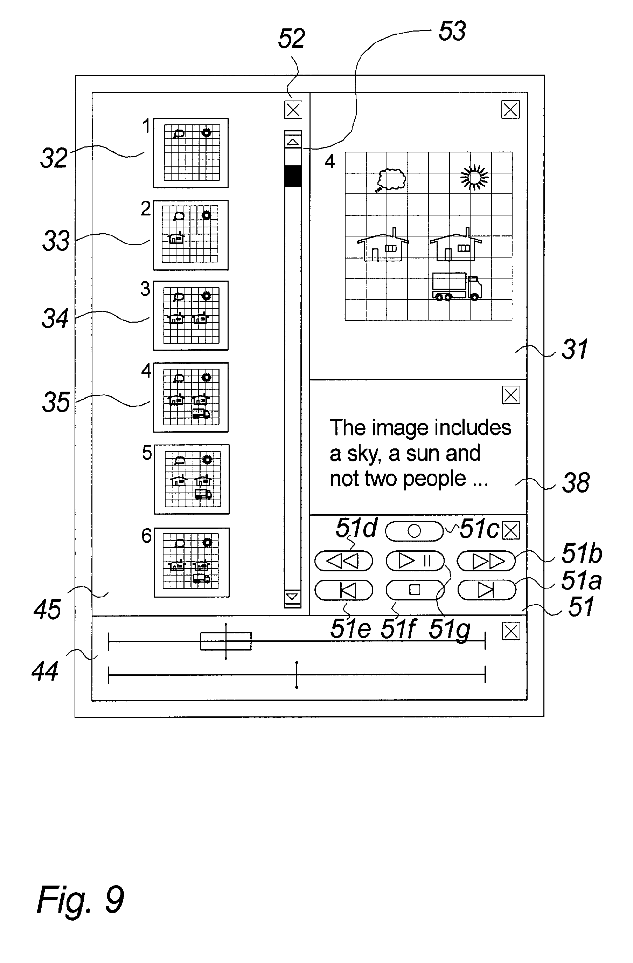

Figure 9 illustrates a preferred embodiment of the invention where the GUI 30 has snapshot selecting means 51a-51h in a snapshot selection area 51. The snapshot selecting means works a keyboard comprising a number of buttons for; playing a snapshot comprising a sequence of images, pausing or stopping play, fast rewind or fast forward in the sequence and jumping back and forth to the next snapshot. The snapshot selecting means 51a-51h also comprise a button for recording the data from the position detector 11, 12 and/or for recording a snapshot 32-35.

The figure also illustrates that the GUI 30 preferably works in a Windows-orientated environment with scroll bars 53 and "close window" functions 52.

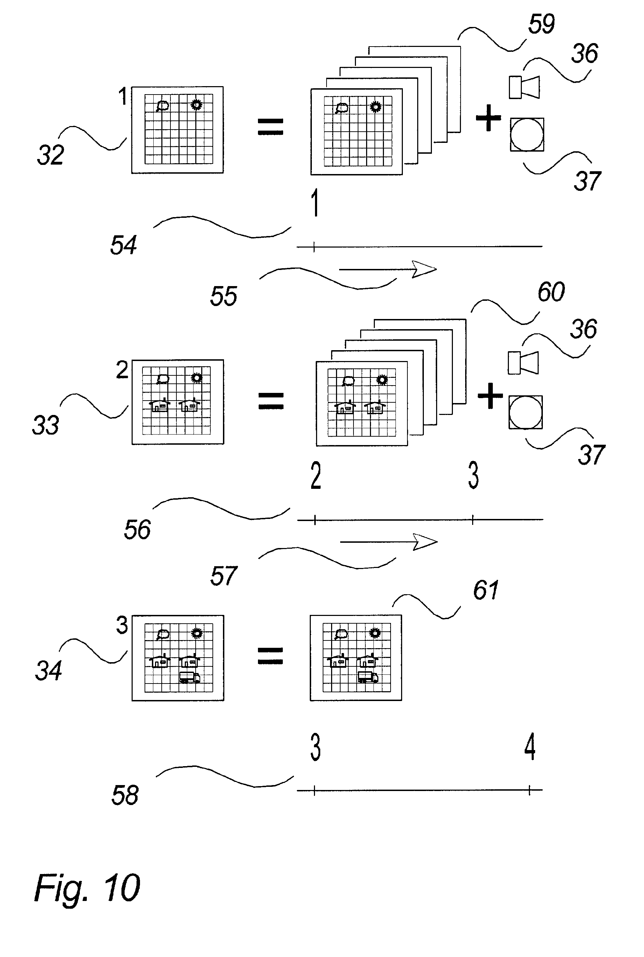

Figure 10 illustrates some of the possible snapshot combinations. When activated, the first snapshot 32 will comprise a sequence of images 59 where the sequence is the position data recorded in a time period after storing of the first snapshot 32. The activation and direction of the sequence are illustrated by an arrow 55 under a section of a time line 54.

The sequence 59 is accompanied by a sound recording during the time period or a recording performed later but subsequently linked to the snapshot and the time period. The first snapshot 32 is also accompanied by text illustrated by the text indication means 37.

The second snapshot 33 comprises a sequence of images 60 where the sequence is the position data recorded during a time period between the storing of the second snapshot 33 and the third snapshot 34. The user's active storage of the third snapshot 34 ended the recording in connection with the second snapshot 33. The sequence 60 is accompanied by a sound recording. The second snapshot 33 is also accompanied by text illustrated by the text indication means 37 and the direction of the sequence is illustrated by an arrow 57 under a section of a time line 56.

The third snapshot 34 only comprises one image 61 and does therefore not have an arrow under its section of the time line 58. It has no accompanying sound or text comments which is illustrated by the absence of any sound or text indicator.

Many other combinations of snapshot types, sequences, directions of sequences etc. are possible within the scope of the invention.

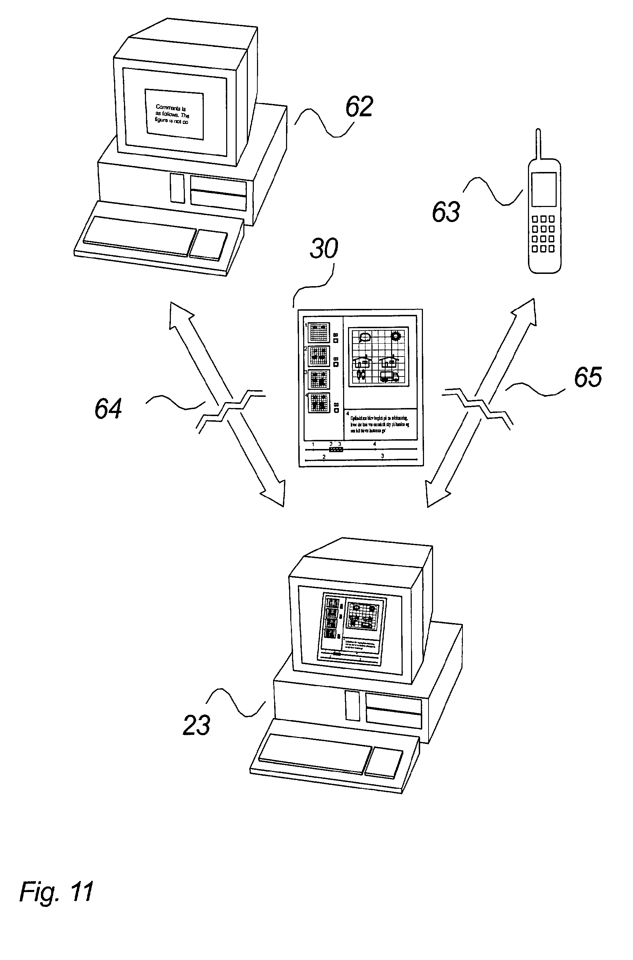

Figure 11 illustrates the possibility of exporting and importing a snapshot or even the present GUI as whole between connected computers. After having used the position detection system, it is often advantageous to be able to export a snapshot to another person's computer e. g. for getting that person's comments to the snapshot.

The GUI 30 has the ability to store the desired snapshot 61 in a preferred file format and thereby create the possibility of sending the file by e-mail to other computers 62 where all the computers are connected to each other i.e. through the Internet. It is also possible to store the snapshot as an HTML document and subsequently upload the document to a homepage or forward the snapshot as an SMS message or a similar type of message to a mobile telephone 63.

In an advanced embodiment, the computers all have the necessary software to receive i.e. snapshots and text may be written directly in the accompanying text area or changes of the images be made. After having commented or changed the snapshots, they may be returned to the sender and the sender will receive the snapshot directly in the GUI with the comments and/or changes.

### Reference numbers

- 10.: Foundation such as a white- or a blackboard
- 11, 12.: Position system detectors
- 13.: Pointing device such as a pen or stylus
- 14, 15.: Light emitters
- 16.: Connection between detectors
- 17.: Connection between detectors and holder
- 18.: Penholder
- 19.: Computer
- 20.: Loudspeaker of the computer
- 21.: Loudspeaker and/or light emitters in the penholder
- 22.: Connection between holder and computer
- 23.: Computer 19 with a graphical user interface
- 23a.: Central unit of the computer
- 23b.: Keyboard of the computer
- 23c.: Computer screen
- 23d.: Computer mouse
- 23e.: Program processing means including a time generator
- 24.: Image generation system such as a projector
- 25.: Connection between image projector and computer
- 26.: Drawing image
- 27.: Projected image
- 28.: Drawing information area
- 29.: Drawing information
- 30.: Graphical user interface (GUI)
- 31.: Image monitoring area
- 32.: First snapshot
- 33.: Second snapshot
- 34.: Third snapshot
- 35.: Fourth snapshot
- 36.: Graphical sound indication means

- 37.: Graphical text indication means
- 38.: Text monitoring and/or editing area
- 39.: Complete time line
- 40.: Relative time line
- 41.: Position indication marker
- 42.: Time indication of a second snapshot
- 43.: Time indication of a third snapshot
- 44.: Time line area
- 45.: Snapshot monitoring area
- 46.: Starting point
- 47.: Ending point
- 48.: Integrated image
- 49.: Time indicator such as a cursor
- 50.: Direction arrow
- 51.: Snapshot selecting means
- 51a-51g.: PLAY/PAUSE 51g, REWIND 51d, FORWARD 51b, STOP 51f, RECORD 51c, JUMP FORWARD 51a, JUMP BACK51e
- 52.: "close window" function
- 53.: Scroll bar
- 54.: Section of a time line
- 55.: Arrow indicating the direction of travel
- 56.: Section of a time line
- 57.: Arrow indicating the direction of travel
- 58.: Section of a time line
- 59.: Snapshot with a sequence of images
- 60.: Another snapshot with a sequence of images
- 61.: Snapshot
- 62.: A further computer
- 63.: Communication device
- 64.: Connection between computers
- 65.: Connection between computer and communication device
- RA.: Reference area
- I.: Image
- ID.: Image data
- ST.: Storage means
- SRM.: Routing means
- FS.: Fault states
- NFS: No-fault states
- TL.: Time line
- TLG.: Time line grabber
- TLM.: Time line monitor

## Claims

1. Position detection system comprising
at least one pointer device (13)
at least one detector (11, 12) adapted for detecting the position of the at least one pointer device (13),
signal processing means (19, 23a; 23e) for controlling the said at least one detector (11, 12)
said system comprising a user interface.

2. Position detection system according to claim 1, wherein said user interface comprises
at least one light emitting arrangement (14, 15),
at least one sound emitting arrangement (20, 21),
routing means (SRM)
said routing means (SRM) being adapted to routing fault states (FS) to said sound emitting arrangement (20, 21) and to routing no-fault states (NFS) to the light emitting arrangement (14, 15).

3. Position detection system according to claim 1 or 2, wherein the at least one light emitting arrangement (14, 15) comprises light indication means (14, 15) integrated in the position detectors (11, 12).

4. Position detection system according to any of claims 1-3, wherein said user interface comprises at least one light emitting arrangement (14, 15).

5. Position detection system according to any of claims 1-4, wherein the at least one light emitting arrangement (14, 15) comprises a light emitting arrangement (14, 15) integrated in the position detectors (11, 12).

6. Position detection system according to any of claims 1-5, wherein said user interface comprises at least one sound emitting arrangement (20, 21).

7. Position detection system according to claims 1, 3, and 4, wherein said system comprises routing means (SRM), said routing means (SRM) being adapted to routing predefined fault states (FS) and no-fault states (NFS) to signaling means (14, 15, 20, 21).

8. Position detection system according to claim 7, wherein said routing means (SRM) routes the fault states (FS) to said sound emitting arrangement (20, 21) and routes the no-fault states (NFS) to said light emitting arrangement (14, 15).

9. Graphical User Interface (30) for displaying data from a position detection system according to claim 1, said GUI comprising
program processing means including a time reference generator (23e)
means for recording and storing a sequence of images (59, 60, 61), said images (59, 60, 61) referring to a time reference provided by said time reference generator (23e)
at least two time lines (39, 40)
at least one image monitoring area (31, 45) adapted to monitoring images of said recorded and stored sequence of images (59, 60, 61) with reference to at least one of said time lines (39, 40),
at least one of said time lines (40) being adapted to monitoring a sub-interval of at least one of said at least two time lines (39).

10. Graphical user interface (30) according to claim 9, wherein an image displayed at the at least one image monitoring area (31) refers to a cursor (49) referring to at least one of said at least two time lines (39, 40).

11. Graphical user interface (30) according to claim 9 or 10 wherein the at least two time lines (39, 40) have different time resolutions.

12. Graphical user interface (30) according to any of claims 9-11 wherein the GUI further includes a snapshot monitoring area (45) comprising one or more snapshots (32; 35).

13. Graphical User Interface (30) according to claim 12 wherein a snapshot (32; 35) includes one (61) or a sequence (59, 60) of images.

14. Graphical User Interface (30) according to any of claims 9-13 wherein the GUI further includes a text monitoring and/or editing area (38).

15. Graphical User Interface (30) according to any of claims 9-14 wherein text of the text monitoring and/or editing area (38) is linked to at least one snapshot (32; 35).

16. Graphical User Interface (30) according to any of claims 9-15 wherein at least one piece of sound is linked to at least one snapshot (32; 35).

17. Graphical User Interface (30) according to any of claims 9-16 wherein at least one of the snapshots is in a data format allowing export and/or import of said snapshots between computers (23, 62) or between a computer and at least one other communication device (63).

18. Graphical User Interface (30) for displaying data from a position detection system according to claim 1 and at least one image generating system (24), said GUI (30) comprising
a program processor including a time generator (23e)
wherein at least one integrated image (48) is created by integrating the at least one image (26, 27) of the position detection system partly or completely in the at least one image of the image generating system (24) in relation to the time of the program processor including a time generator (23e).

19. Graphical User Interface (30) according to claim 18, wherein said integrated image (48) is completely or partly scanned by a character recognizing system.

20. Graphical User Interface (30) according to claim 18 or 19 wherein the result of said scanning is stored in one or more programs on at least one computer (23) and/or controls said one or more programs.

21. Position detection system comprising
at least one position detector (11, 12) for detecting the position(s) of at least one pointer (13) on at least one reference area (RA)
means for mapping said position(s) relative to said at least one reference area (RA) into at least one data representation
at least one image generating system (24) adapted for generating at least one image (I) on said at least one reference area (RA) according to image data (ID, BMP),
said system comprising means for storing the said pointer position(s) (13) relative to the image data (ID) generated on the reference area (RA).

22. Position detection system according to claim 21,wherein the said image generating system (24) comprises an image projecting system.

23. Position detection system according to claim 21 or 22, wherein the said means for storing the said pointer position(s) (13) relative to the image data (ID) generated on the reference area (RA) are adapted for merging at least one data representation and the at least one image data into one image file.

24. Position detection system comprising
at least one position detector (11, 12) for detecting the position(s) of at least one pointer (13) on at least one reference area (RA)
means for mapping said position(s) relative to said at least one reference area (RA) into at least one data representation
at least one image generating system (24) adapted for generating at least one image (I) on said at least one reference area (RA) according to image data (ID)
said image generating system generating an image representing the dynamic interface of a computer program running on a computer,
said system comprising character recognition means for converting at least some of the said data representations into digitally represented characters, and said system comprising means for inserting the said digitally represented characters into the running program via the said dynamic computer interface.

25. Position detection system according to claim 24 wherein the said image generating system (24) comprises an image projecting system.

26. Graphical User Interface (30) for displaying data from a position detection system according to claim 1, said GUI comprising a snapshot monitoring area (45),
said snapshot monitoring area (45) incorporating snapshot selecting means (51),
said snapshot selecting means (51) facilitating
the display of at least one of the images (59, 60, 61) associated with the selected snapshot.

27. Graphical User Interface according to claim 26, wherein said snapshot selecting means (51) facilitates display of a sequence of images (59, 60, 61) starting with the image associated with the selected snapshot (32-35).

28. Graphical User Interface according to claim 26 or 27 wherein the snapshot selecting means (51) comprises a PLAY control (51g).

29. Method of communicating the state of a system according to claim 1 to a user, said method comprising the steps of
indicating at least one system fault by means of sound
indicating that the system works properly by means of visual indicating means (14, 15)

30. Method of merging data into an image (I), said step comprising the steps of
providing the image on a reference area (RA),
detecting the position(s) of at least one pointer relative to a reference area (RA),
representing the image representing data (ID) and the detected position(s) in such a way that a combined merged image may be retrieved or visualized.

31. Use of a position detection system according to claim 1 and a Graphical User Interface according to any of the claim 18-20 for controlling one or more computers.
